# EUROPÄISCHE PATENTANMELDUNG

(11) **EP 1 708 466 A1**
(43) Veröffentlichungstag der Anmeldung: **04.10.2006**
(21) Anmeldenummer: 06100565.8
(22) Anmeldetag: 19.01.2006
(51) Int. Cl.: H04M 1/57, H04M 1/725, H04M 1/2745, G06T 3/00, G06T 15/70, G06K 9/00

(54) **Verfahren zur Darstellung eines einem Kommunikationsteilnehmer zugeordneten Bildes an einem Kommunikationsendgerät**

(30) Priorität: 31.03.2005 DE 10514772
(71) Anmelder: SIEMENS AKTIENGESELLSCHAFT, 80333 München (DE)
(72) Erfinder: Guitarte Perez, Jesus Fernando, 80335 München (DE); Lucas, Carlos, 81549 München (DE); Lukas, Klaus, 81739 München (DE)

(57) **Zusammenfassung**

Eine interessante technische Funktion für mobile oder stationäre Kommunikationsendgeräte stellt das Abspielen eines Videos der entsprechenden Person bei einem eingehenden Anruf dar. Nachteilig bei diesem Verfahren ist, dass das Abspielen von Videos, während eines eingehenden Anrufs, mit hoch komplexen Prozessen verbunden ist, da die gespeicherten Videos in Echtzeit decodiert werden müssen. Somit stellt sich der vorliegenden Erfindung die Aufgabe, ein Verfahren anzugeben, durch welches die erforderliche Rechenleistung und der benötigte Speicherplatz verringert wird. Diese Aufgabe wird durch ein Verfahren gelöst, bei welchem ein Bild der anrufenden Person durch einen Gesichtsanimationsalgorithmus animiert wird.

## Beschreibung

Die vorliegende Erfindung betrifft ein Verfahren und ein Computerprogrammprodukt zur Darstellung eines einem Kommunikationsteilnehmer zugeordneten Bildes an einem Kommunikationsendgerät.

Eine interessante technische Funktion für mobile oder stationäre Kommunikationsendgeräte ist, bei einem eingehenden Anruf ein Bild, insbesondere ein Porträt, des entsprechenden Anrufers auf einer Bedienanzeige des Kommunikationsendgerätes darzustellen. Neben einem Bild des Anrufers, werden üblicherweise noch der Name und die Telefonnummer des Anrufers angezeigt. Diese so genannten "Calling Faces" erweitern den multimedialen Charakter von Kommunikationsendgeräten auf eine besonders benutzerfreundliche Weise, da sie es einem Benutzer ermöglichen auf den ersten Blick zu erkennen, wer gerade anruft. Zudem wird eine weitere Personalisierung von Kommunikationsendgeräten durch diese Funktion erreicht, welches als ein Schlüsselfaktor zum Erfolg in der Kommunikationsbranche angesehen wird.

Eine weitere interessante technische Funktion für mobile oder stationäre Kommunikationsendgeräte stellt das Abspielen eines Videos der entsprechenden Person bei einem eingehenden Anruf dar. Auch diese so genannten "Ringing Videos" finden mehr und mehr Anwendung in Kommunikationsendgeräten.

Nachteilig bei dem Verfahren der "Ringing Videos" ist, dass das Abspielen von Videos, während eines eingehenden Anrufs, mit hoch komplexen Prozessen verbunden ist, da die gespeicherten Videos in Echtzeit decodiert werden müssen. Daher ist die Anwendung dieser Funktion auf vielen Kommunikationsendgeräten nicht möglich, die mit nur unzureichenden Rechenleistung- und Speicherplatzkapazitäten ausgestattet sind. Zudem soll möglichst jeder Person in der Kommunikationsteilnehmerliste (Adressbuch) eines Benutzers ein personalisiertes Video zugeordnet sein. Dies erfordert eine Menge Speicherplatz, da die einzelnen Videos alle auf dem Kommunikationsendgerät abgespeichert werden müssen. Beispielsweise benötigt ein einzelnes Video mit einer Dauer von 10 Sekunden und einer Bitstromrate von 128 KBit pro Sekunde ungefähr 1MBit oder 160kByte Speicherplatz. Für hundert Einträge mit einem jeweils zugeordneten Video würden somit rund 1MByte Speicherplatz benötigt. Dies bedeutet, dass auf den meisten Kommunikationsendgeräten nur Speicherplatz für ein Video vorhanden ist.

Somit stellt sich der vorliegenden Erfindung die Aufgabe, ein Verfahren zur Darstellung eines einem Kommunikationsteilnehmer zugeordneten, bewegten Bildes an einem Kommunikationsendgerät anzugeben, durch welches die erforderliche Rechenleistung und der benötigte Speicherplatz verringert wird.

Erfindungsgemäß wird diese Aufgabe durch ein Verfahren und ein Computerprogrammprodukt mit den in Anspruch 1 und Anspruch 9 angegebenen Merkmalen gelöst. Vorteilhafte Weiterbildungen der Erfindung sind in den abhängigen Ansprüchen angegeben.

Entsprechend der vorliegenden Erfindung wird in einem Verfahren zur Darstellung eines einem Kommunikationsteilnehmer zugeordneten Bildes an einem Kommunikationsendgerät das Bild zumindest einem Listeneintrag einer Kommunikationsteilnehmerliste zugeordnet. Mit Hilfe eines Gesichtslokalisationsalgorithmus werden Bildkoordinaten von Gesichtsmerkmalen in dem Bild ermittelt. Die Bildkoordinaten der Gesichtsmerkmale werden dem jeweiligen Bild zugeordnet. Durch ein Steuerzeichen ist das einem Listeneintrag zugeordnete Bild abrufbar. Das abgerufene Bild wird mit Hilfe der zugeordneten Bildkoordinaten der Gesichtsmerkmale bei Empfang des Steuerzeichens animiert. Das animierte Bild wird auf einer Anzeigevorrichtung des Kommunikationsendgerätes dargestellt. In vorteilhafter Weise wird hierbei die erforderliche Rechenleistung verringert, da die Decodierung beispielsweise eines JPEG-Bildes mit anschließender Animation erheblich weniger rechenaufwändig ist, als die Decodierung eines MPEG-Videos. Zudem wird für die Speicherung eines JPEG-Bildes und der zugehörigen Parameter für die Animation ungleich weniger Speicherplatz benötigt als für die Speicherung eines MPEG-Videos. Somit ermöglicht das erfindungsgemäße Verfahren eine Anwendung auch auf Kommunikationsendgeräten mit geringen Rechenleistung- und Speicherplatzkapazitäten.

Gesichtslokalisationsverfahren sind funktional den Bildanalyseverfahren zuzuordnen. Bildanalyseverfahren sind beispielsweise ohne Beschränkung der Allgemeinheit dieses Begriffs Verfahren zur Mustererkennung bzw. zur Detektion von Objekten in einem Bild. Üblicherweise wird bei diesen Verfahren in einem ersten Schritt eine Segmentierung vorgenommen, bei dem eine Zuordnung von Bildpunkten zu einem Objekt erfolgt. In einem zweiten Schritt wird anhand morphologischer Verfahren die Gestalt und/oder die Form der Objekte identifiziert. Letztlich werden in einem dritten Schritt zur Klassifizierung die identifizierten Objekte bestimmten Klassen zugewiesen. Ein weiterer typischer Vertreter eines Bildanalyseverfahrens ist beispielsweise die Handschriftenerkennung.

Ein Gesichtsanimationsalgorithmus steuert die Bewegung von charakteristischen Gesichtsmerkmalspunkten, beispielsweise vorgebbare Punkte am Mund, Kinn oder an den Augen, über vorgebbare Gesichtsanimationsparameter. Um Gesichter mit unterschiedlicher Größe oder unterschiedlichen Proportionen mit vergleichbarem Ergebnis animieren zu können, werden Gesichtsanimationsparameter-Einheiten definiert. Diese sind normiert über die räumlichen Distanzen zwischen den Hauptgesichtsmerkmalen (bspw. Mund, Nase, Augen) eines spezifischen Gesichts. Die Bildpunkte in der Umgebung der verschobenen Gesichtsmerkmalspunkte werden beispielsweise über gängige Interpolationsverfahren ermittelt.

Gemäß einer bevorzugten Ausgestaltung der vorliegenden Erfindung wird das Steuerzeichen durch einen Anruf eines Kommunikationsteilnehmers ausgelöst. Hierdurch kann der angerufene Benutzer auf den ersten Blick erkennen, wer gerade anruft.

Nach einer weiteren vorteilhaften Ausgestaltung der vorliegenden Erfindung wird die Animation des Bildes synchron zu einem akustischen Signal des Kommunikationsendgerätes ausgeführt. Beispielsweise kann die animierte Bewegung eines Mundes oder von Augenbrauen synchron zu einem Klingelton erfolgen.

Nach einer weiteren vorteilhaften Ausgestaltung der vorliegenden Erfindung wird die Animation des Bildes synchron zu einem haptischen Signal des Kommunikationsendgerätes ausgeführt. So kann die animierte Bewegung des Kopfes beispielsweise synchron zu einem Vibrationsalarm erfolgen.

Bei der Ausführung des erfindungsgemäßen Computerprogrammprodukts wird durch die Programmablaufsteuerungseinrichtung zur Darstellung eines einem Kommunikationsteilnehmer zugeordneten Bildes an einem Kommunikationsendgerät das Bild zumindest einem Listeneintrag einer Kommunikationsteilnehmerliste zugeordnet. Mit Hilfe eines Gesichtslokalisationsalgorithmus werden Bildkoordinaten von Gesichtsmerkmalen in dem Bild ermittelt. Die Bildkoordinaten der Gesichtsmerkmale werden dem jeweiligen Bild zugeordnet. Durch ein Steuerzeichen ist das einem Listeneintrag zugeordnete Bild abrufbar. Das abgerufene Bild wird mit Hilfe der zugeordneten Bildkoordinaten der Gesichtsmerkmale bei Empfang des Steuerzeichens animiert. Das animierte Bild wird auf einer Anzeigevorrichtung des Kommunikationsendgerätes dargestellt.

Die vorliegende Erfindung wird nachfolgend an einem Ausführungsbeispiel anhand der Zeichnungen näher erläutert. Es zeigen
- Figur 1: ein Gesichtsmodell mit neutralem Gesichtsausdruck und Gesichtsmerkmalen zur Lokalisation eines Gesichts in einem Bild,
- Figur 2: ein Gesichtsmodell mit neutralem Gesichtsausdruck und Gesichtsmerkmalspunkten zur Definition eines Gesichtsausdrucks.

Nach einem Ausführungsbeispiel der vorliegenden Erfindung ordnet ein Benutzer ein gespeichertes Bild der Person XY dem entsprechenden Adressbucheintrag der Person XY auf seinem mobilen Kommunikationsendgerät zu. Mit Hilfe eines Gesichtslokalisationsalgorithmus wird das Gesicht in dem Bild lokalisiert und die Bildkoordinaten von Augenbrauen, Augen Nase und Mund identifiziert und als dem jeweiligen Bild zugeordnetes Merkmal auf dem mobilen Kommunikationsendgerät abgespeichert.

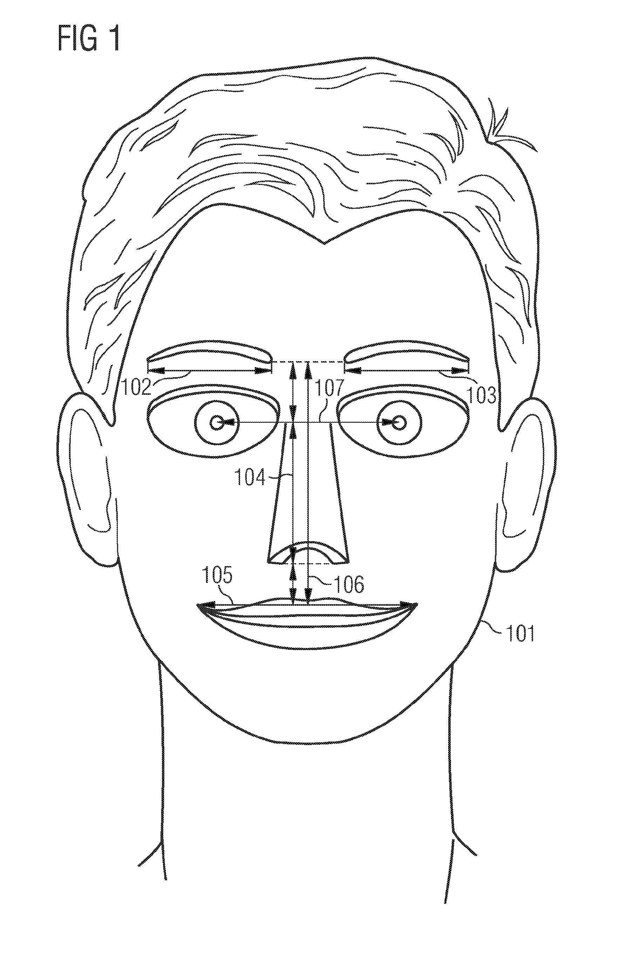

Die Figur 1 zeigt ein neutrales Gesicht 101, in dem die einzelnen Gesichtsmerkmale 102 bis 107 durch einen Gesichtslokalisationsalgorithmus ermittelt wurden.

Ein geometrisches Verfahren zum Analysieren eines Bildes, um das Vorhandensein und die Position eines Gesichts zu bestimmen, umfasst zunächst ein Festlegen von Segmenten in dem erfassten Bild, die helligkeitsspezifische Merkmale aufweisen. Die helligkeitsspezifischen Merkmale können beispielsweise Hell-Dunkel-Übergänge und/oder Dunkel-Hell-Übergänge umfassen. Anschließend wird eine positionsmäßige Beziehung der festgelegten Segmente zueinander überprüft, wobei ein Vorhandensein eines (menschlichen) Gesichts, insbesondere an einer bestimmten Position in dem erfassten Bild, abgeleitet wird, wenn eine Auswahl von festgelegten Segmenten eine bestimmte positionsmäßige Beziehung aufweist. Das bedeutet, durch das gerade beschriebene Verfahren kann durch Analyse bestimmter Bereiche des erfassten Bildes, nämlich der Segmente mit helligkeitsspezifischen Merkmalen, genauer gesagt durch Überprüfen der positionsmäßigen Beziehung der festgelegten Segmente auf das Vorhandensein eines Gesichts, insbesondere menschlichen Gesichts, geschlossen werden.
Insbesondere werden Segmente in dem erfassten Bild festgelegt, bei denen die helligkeitsspezifischen Merkmale scharfe bzw. abrupte Helligkeitsübergänge, beispielsweise von Dunkel nach Hell oder von Hell nach Dunkel aufweisen. Derartige (scharfe) Helligkeitsübergänge finden sich beispielsweise in einem Gesicht eines Menschen, insbesondere beim Übergang von der Stirn zu den Augenbrauen 102 und 103 oder (bei Menschen mit heller Haarfarbe) beim Übergang von der Stirn in den Schatten der Augenhöhlen 107. Derartige (scharfe) Helligkeitsübergänge finden sich jedoch auch beim Übergang von dem Oberlippenbereich bzw. Lippenbereich zur Mundöffnung oder von der Mundöffnung zum Lippenbereich der Unterlippe bzw. zum Unterlippenbereich 105. Ein weiterer Helligkeitsübergang stellt sich zwischen der Unterlippe und dem Kinnbereich, genauer gesagt als Schattenbereich (je nach Lichtverhältnis bzw. Lichteinfall) basierend auf einer leichten Vorwölbung der Unterlippe, ein. Durch eine Vorverarbeitung des Bilds mittels eines Gradientenfilters können (scharfe) Helligkeitsübergänge, wie die an den Augenbrauen 102 und 103, an den Augen 107, oder an dem Mund 105 besonders hervorgehoben und sichtbar gemacht werden.
Zum Überprüfen der positionsmäßigen Beziehung der ermittelten Segmente wird beispielsweise in einem ersten Untersuchungsschritt jedes der festgelegten Segmente dahingehend untersucht, ob zu einem zu untersuchenden Segment ein zweites festgelegtes Segment existiert, das auf einer horizontalen Linie bzw. einer im Wesentlichen horizontal verlaufenden Linie zu dem gerade untersuchten festgelegten Segment liegt. Ausgehend von einem erfassten Bild, bestehend aus einer Mehrzahl von Bildpunkten muss das zweite Segment nicht unbedingt auf einer der von dem zu untersuchenden Segment umfassten waagerechten Linie an Bildpunkten liegen, es kann auch um einen vorbestimmten kleinen Betrag an Bildpunkten höher oder tiefer bezüglich der waagerechten oder horizontalen Linie 102 oder 103 liegen. Wird ein zweites festgelegtes horizontales Segmente 103 oder 102 gefunden, so wird nach einem dritten festgelegten Segment gesucht, das sich unterhalb des untersuchten und des zweiten festgelegten Segments befindet und für das gilt, dass ein Abstand von dem untersuchten zu dem zweiten festgelegten Segment und ein Abstand einer Verbindungsstrecke zwischen dem untersuchten und dem zweiten festgelegten Segment zu dem dritten festgelegten Segment ein erstes vorbestimmtes Verhältnis aufweist. Insbesondere kann eine Normale 106 zu der Verbindungsstrecke zwischen dem untersuchten und dem zweiten festgelegten Segment definiert werden, wobei der Abstand von dem dritten Segment (entlang der Normalen) zu der Verbindungsstrecke zwischen dem untersuchten und dem zweiten festgelegten Segment in das erste vorbestimmte Verhältnis eingeht. Durch den gerade beschriebenen ersten Untersuchungsschritt kann somit auf das Vorhandensein eines Gesichts geschlossen werden, indem die positionsmäßige Beziehung zwischen drei festgelegten Segmenten ermittelt wird. Hierbei wird davon ausgegangen, dass das untersuchte und das zweite festgelegte Segment einen jeweiligen Augenbrauenabschnitt im Gesicht eines Menschen darstellt, der normalerweise einen markanten bzw. scharfen Hell-Dunkel-Helligkeitsübergang von oben nach unten aufweist und somit gut erkennbar ist. Das dritte festgelegte Segment stellt ein Segment einer Mundpartie bzw. den zwischen Oberlippe und Unterlippe Schatten bildenden Grenzbereich 105 dar. Neben der Möglichkeit, Augenbrauen als markante Segmente mit helligkeitsspezifischen Merkmalen zu verwenden, ist es auch möglich, an Stelle der Augenbrauen Schatten bildende Bereiche der Augenhöhlen bzw. die Augen oder die Iris selbst 107 zu verwenden. Das Verfahren ist beliebig erweiterbar auf zusätzliche zu untersuchende Segmente, die beispielsweise eine Erkennung einer Brille oder zusätzliche verifizierende Merkmale (Nase 106, geöffnete Mundpartie 105) einschließen.

Nach einer Lokalisation des Gesichtes in dem Bild wird durch den Gesichtslokalisationsalgorithmus beispielsweise eine Segmentierung der einzelnen Gesichtmerkmale vorgenommen, das heißt eine Zuordnung von Bildpunkten zu einem Objekt, beispielsweise rechte Augenbraue 102, linke Augenbraue 103 oder Mund 105. Über eine Kantendetektion wird der Kantenverlauf der einzelnen Gesichtsmerkmale ermittelt und anschließend durch den Gesichtslokalisationsalgorithmus charakteristische Gesichtsmerkmalspunkte entlang des detektierten Kantenverlaufs an vorgebbaren Stellen des jeweiligen Gesichtmerkmals ermittelt.

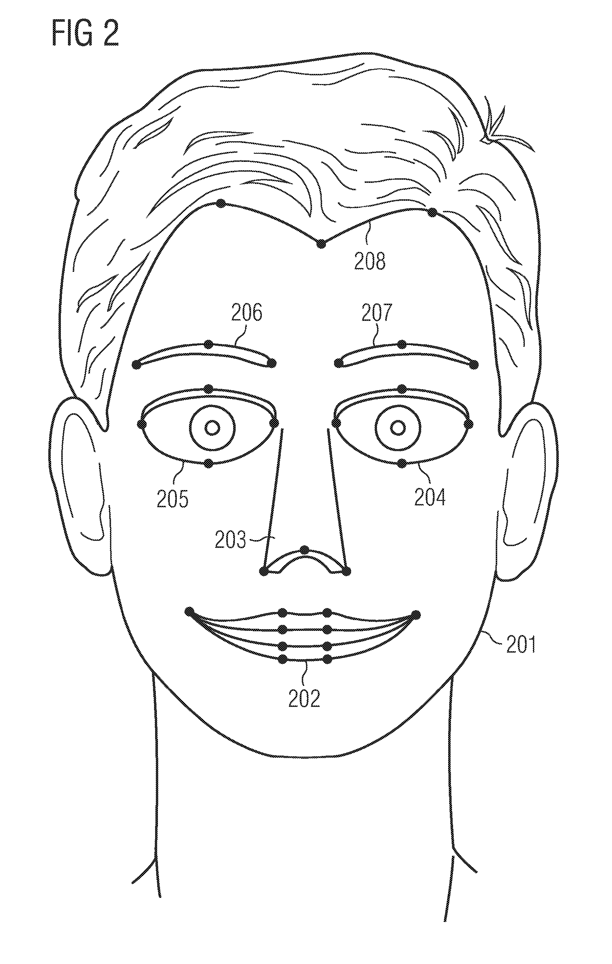

Die Figur 2 zeigt ein Gesicht mit neutralem Gesichtsausdruck 201, in welchem solche charakteristischen Gesichtmerkmalspunkte ermittelt wurden. So sind Gesichtsmerkmalspunkte am Mund 202, der Nase 203, den Augen 204 und 205, den Augenbrauen 206 und 207, sowie am Haaransatz 208 zu erkennen.

Bei einem Anruf der Person XY auf dem mobilen Kommunikationsendgerät des Benutzers wird in diesem Ausführungsbeispiel ein Steuerzeichen ausgelöst, durch welches das dem Adressbucheintrag der Person XY zugeordnete Bild mit den zugehörigen Bildkoordinaten der Gesichtsmerkmalspunkte abgerufen wird. Das Bild wird durch einen Gesichtsanimationsalgorithmus anhand der Gesichtmerkmalspunkte animiert und das animierte Bild auf einer Anzeigevorrichtung des mobilen Kommunikationsendgerätes dargestellt.

Bei einem Gesichtsanimationsalgorithmus wird beispielsweise die Bewegung von charakteristischen Gesichtsmerkmalspunkten über vorgebbare Gesichtsanimationsparameter gesteuert. Diese Gesichtsanimationsparameter geben beispielsweise an, um welche Amplitude der rechte Mundwinkel in 202 für ein kleines Lächeln verschoben werden muss. Über mehrere Gesichtsanimationsparameter kann so ein kompletter Gesichtsausdruck in unterschiedlichen Intensitäten von traurig über überrascht oder ärgerlich bis hin zu fröhlich erzeugt werden. Um Gesichter mit unterschiedlicher Größe oder unterschiedlichen Proportionen mit vergleichbarem Ergebnis animieren zu können, werden Gesichtsanimationsparameter-Einheiten definiert. Diese sind normiert über die räumlichen Distanzen zwischen den Hauptgesichtsmerkmalen eines spezifischen Gesichts. Die Bildpunkte in der Umgebung der verschobenen Gesichtsmerkmalspunkte werden beispielsweise über gängige Interpolationsverfahren ermittelt.

Nach einem weiteren Ausführungsbeispiel der vorliegenden Erfindung erfolgt die Animation synchron zu einem Klingelgeräusch des mobilen Kommunikationsendgerätes. Hierbei kann über Zeitmarker in dem akustischen Signal, die beispielsweise ein Periodenintervall des akustischen Signals abbilden, die Bildanimation synchronisiert werden. Eine andere Möglichkeit zur Synchronisation insbesondere mit einem akustischen Sprachsignal ist die Verwendung von Visemen. Dies sind die visuellen Entsprechungen der Phoneme (Lautbausteine) und zeigen die typische Stellung und/oder Bewegung insbesondere des Mundes bei bestimmten charakteristischen Phonemen, wie beispielsweise (/p/, /b/, /m/), /U/ oder /A:/. Sind die Phoneme des akustischen Sprachsignals bekannt, können sie auch zur Steuerung der Gesichtsanimation über die zugeordneten Viseme verwendet werden.

Die Anwendung der vorliegenden Erfindung ist nicht auf die hier beschriebenen Ausführungsbeispiele beschränkt.

## Patentansprüche

1. Verfahren zur Darstellung eines einem Kommunikationsteilnehmer zugeordneten Bildes an einem Kommunikationsendgerät, bei dem
- das Bild zumindest einem Listeneintrag einer Kommunikationsteilnehmerliste zugeordnet wird,
- mit Hilfe eines Gesichtslokalisationsalgorithmus Bildkoordinaten von Gesichtsmerkmalen in dem Bild ermittelt werden,
- die Bildkoordinaten der Gesichtsmerkmale dem jeweiligen Bild zugeordnet werden,
- das einem Listeneintrag zugeordnete Bild durch ein Steuerzeichen abrufbar ist,
- das abgerufene Bild mit Hilfe der zugeordneten Bildkoordinaten der Gesichtsmerkmale durch einen Gesichtsanimationsalgorithmus bei Empfang des Steuerzeichens animiert wird und
- das animierte Bild auf einer Anzeigevorrichtung des Kommunikationsendgerätes dargestellt wird.

2. Verfahren nach Anspruch 1, wobei
das Steuerzeichen durch einen Anruf eines Kommunikationsteilnehmers ausgelöst wird.

3. Verfahren nach mindestens einem der vorhergehenden Ansprüche, wobei
das Steuerzeichen durch eine eingehende Text und/oder Sprachnachricht eines Kommunikationsteilnehmers ausgelöst wird.

4. Verfahren nach mindestens einem der vorhergehenden Ansprüche, wobei
das Steuerzeichen durch eine Auswahl des entsprechenden Listeneintrags aus der Kommunikationsteilnehmerliste ausgelöst wird.

5. Verfahren nach mindestens einem der vorhergehenden Ansprüche, wobei
der Gesichtsanimationsalgorithmus über vorgebbare Parameter durch einen Kommunikationsteilnehmer steuerbar ist.

6. Verfahren nach mindestens einem der vorhergehenden Ansprüche, wobei
die zu ermittelnden Gesichtsmerkmale durch einen Kommunikationsteilnehmer vorgebbar sind.

7. Verfahren nach mindestens einem der vorhergehenden Ansprüche, wobei
die Animation des Bildes synchron zu einem akustischen Signal des Kommunikationsendgerätes ausgeführt wird.

8. Verfahren nach mindestens einem der vorhergehenden Ansprüche, wobei
die Animation des Bildes synchron zu einem haptischen Signal des Kommunikationsendgerätes ausgeführt wird.

9. Computerprogrammprodukt, das in einen Arbeitsspeicher einer Programmablaufsteuerungseinrichtung ladbar ist und zumindest einen Codeabschnitt aufweist, bei dessen Ausführung zur Darstellung eines einem Kommunikationsteilnehmer zugeordneten Bildes an einem Kommunikationsendgerät
- das Bild zumindest einem Listeneintrag einer Kommunikationsteilnehmerliste zugeordnet wird,
- mit Hilfe eines Gesichtslokalisationsalgorithmus Bildkoordinaten von Gesichtsmerkmalen in dem Bild ermittelt werden,
- die Bildkoordinaten der Gesichtsmerkmale dem jeweiligen Bild zugeordnet werden,
- das einem Listeneintrag zugeordnete Bild durch ein Steuerzeichen abrufbar ist,
- das abgerufene Bild mit Hilfe der zugeordneten Bildkoordinaten der Gesichtsmerkmale durch einen Gesichtsanimationsalgorithmus bei Empfang des Steuerzeichens animiert wird und
- das animierte Bild auf einer Anzeigevorrichtung des Kommunikationsendgerätes dargestellt wird,
wenn das Computerprogrammprodukt in der Programmablaufsteuerungseinrichtung abläuft.
